(19)

Europäisches
Patentamt
European
Patent Office
Office européen
des brevets

(11) **EP 2 865 654 A1**

(12) **EUROPEAN PATENT APPLICATION**

(43) Date of publication:
**29.04.2015 Bulletin 2015/18**

(51) Int Cl.:
*C02F 3/34* (2006.01)      *C02F 3/30* (2006.01)

(21) Application number: **14168624.6**

(22) Date of filing: **16.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.10.2013 CN 201310496976**

(71) Applicant: **Jiangxi JDL Environmental Protection Co., Ltd.**
**Changleng Overseas Investment Zone (First Zone)**
**Xinjian, Nanchang**
**Jiangxi 330100 (CN)**

(72) Inventors:
- **Liao, Zhimin**
  **330100 Nanchang Jiangxi (CN)**
- **Tao, Kun**
  **330100 Nanchang Jiangxi (CN)**
- **Xiong, Jianzhong**
  **330100 Nanchang Jiangxi (CN)**
- **Zhou, Rongzhong**
  **330100 Nanchang Jiangxi (CN)**
- **Zeng, Kai**
  **330100 Nanchang Jiangxi (CN)**
- **Liu, Huaqiong**
  **330100 Nanchang Jiangxi (CN)**
- **Zou, Can**
  **330100 Nanchang Jiangxi (CN)**

- **Li, Wenxuan**
  **330100 Nanchang Jiangxi (CN)**
- **Wang, Fangfang**
  **330100 Nanchang Jiangxi (CN)**
- **Xiao, Jun**
  **330100 Nanchang Jiangxi (CN)**
- **Hu, Jiaojiao**
  **330100 Nanchang Jiangxi (CN)**
- **Xu, Yingying**
  **330100 Nanchang Jiangxi (CN)**
- **Xie, Jinwen**
  **330100 Nanchang Jiangxi (CN)**
- **Yang, Fan**
  **330100 Nanchang Jiangxi (CN)**
- **Li, Kun**
  **330100 Nanchang Jiangxi (CN)**
- **Liu, Jinfeng**
  **330100 Nanchang Jiangxi (CN)**
- **Deng, Yilin**
  **330100 Nanchang Jiangxi (CN)**
- **Wang, Zi**
  **330100 Nanchang Jiangxi (CN)**
- **Xu, Zhenrong**
  **330100 Nanchang Jiangxi (CN)**
- **Wang, Yanlong**
  **330100 Nanchang Jiangxi (CN)**

(74) Representative: **Hryszkiewicz, Danuta et al**
**Kancelaria Patentowa**
**Matthias Scholl, Inc.**
**Skrytka Pocztowa 13**
**75-454 Koszalin (PL)**

(54) **Method for wastewater treatment**

(57)    A method for wastewater treatment in a bioreactor, comprises recycling organic sludge in the bioreactor to supply carbon sources for removing nitrogen and phosphor and increase organic loading of the reactor, and adjusting operational parameters for the bioreactor to form facultative-anaerobic environment or anaerobic environment in the bioreactor. By following the method of the present invention, recycling sludge and simultaneously removing nitrogen and phosphor are completed such that the treatment processes for wastewater disposal are simplified; the sludge is recycled as carbon sources in the bioreactor such that saving resources is realized and the carbon emission into atmosphere is reduced; and zero-amount sludge is discharged such that harm from secondary pollution is avoided.

EP 2 865 654 A1

**Description**

The invention relates to a method for wastewater treatment, and particularly to a method for discharging zero-amount sludge and simultaneously removing carbon, nitrogen, and phosphor in wastewater treatment.

For the past few years in China, constructions in urban sewage disposal works have been completed in the main, and constructions in township and village sewage disposal works have been started. However, since township and village wastewater is mainly mixture of domestic wastewater and livestock wastewater (wastewater mixture), the pollutants in township and village wastewater have high concentrations and are widely dispersed so that the management and treatment for the township and village wastewater are difficult. Therefore, Wastewater mixture has raised a major issue in environment of China nowadays, and an efficient way for disposal of wastewater mixture is urgently and importantly required. Conventional methods for treating wastewater have the following problems: (1) the implementation is difficult (the design is not standardized, the efficiency is low, and the required space is large); (2) the effluent level is unstable (the management is complex, and the effluent level highly depends on seasonal factors); and (3) the pollution to the environment are severe (the residual organic sludge is discharged out to environment, and odors are produced).

In view of the above described problem, it is one objective of the invention to provide a method for disposal of wastewater that features in easy implementation, stable effluent level, and amicable effects in environment, which is highly applicable for treating wastewater mixture.

In order to realize the above objective, it is one objective of the invention to provide a method for treating sludge and simultaneously removing nitrogen and phosphor in a facultative-anaerobic-adapted membrane bioreactor (FMBR) for wastewater treatment by recycling organic sludge to increase organic loading of the bioreactor.

The method for discharging zero-amount sludge and simultaneously removing carbon, nitrogen, and phosphor of the invention, comprises: recycling organic sludge in the bioreactor to supply carbon sources for removing nitrogen and phosphor to increase organic loading of the bioreactor; and adjusting operational parameters for the bioreactor to form facultative-anaerobic environment or anaerobic environment in the bioreactor to generate microorganisms comprising facultative anaerobic microorganisms as the dominant microorganisms.

Characteristics of the invention are: the degradations in carbon compounds, nitrogenous compounds, and phosphorous compounds are conducted simultaneously in the same bioreactor.

Other characteristics of the invention comprise: the organic compounds in the wastewater are degraded to carbon dioxide, nitrogen gas, phosphine, phosphanylphosphane, and water.

The advantages of the present invention include: the adaptability of the method is highly increased because it is friendly to environment and no sludge is discharged and correspondingly there are more options in selecting the locations of the sewage treatment works; the efficiency in treatment is significantly increased because the sludge is eliminated and the nitrogen and phosphor are removed simultaneously; saving resources and reducing carbon emission to the atmosphere is realized because the sludge is recycled; secondary pollution is effectively avoided because no sludge is emitted.

Detailed description will be given below.

In the method of the present invention, a facultative-anaerobic condition or an anaerobic condition is formed in the bioreactor such that organic compounds are transformed into carbon dioxide and water, and etc., because of the self-metabolism of the microorganisms in the wastewater; and the died microorganisms are decomposed as nutritional sources for other lived microorganisms. Therefore, a dynamic balance exists in the organic sludge in the bioreactor, and a near-zero emission of sludge is realized. The reaction processes are illustrated as below:

In the method of the present invention, since a facultative-anaerobic environment or anaerobic environment is formed in the bioreactor in the present invention, the microbes in the bioreactor metabolizes in itself to transform phosphor in the wastewater into chemical materials of the cells, and then the chemical materials are transformed into phosphine and phosphanylphosphane via a biological cycle. The reaction processes for phosphor in the method are described as below:

Carbon sources + Phosphates + Facultative anaerobic microbes $\rightarrow$ Cells (Organophosphorus compounds) Cells (Organophosphorus compounds) + Facultative anaerobic microbes $\rightarrow P_2H_4/PH_3$

In the method of the present invention, since a facultative-anaerobic environment or anaerobic environment is formed in the bioreactor in the present invention, the microorganisms in the bioreactor metabolizes to transform ammonium nitrogen into nitrogen gas. The reaction processes for nitrogen in the method are described as below:

$$\tfrac{1}{2}NH_4^+ + \tfrac{1}{2}H_2O + \tfrac{1}{4}O_2 + \text{Facultative anaerobic microbes} \rightarrow \tfrac{1}{2}NO_2^- + 2e + 3H^+$$

$$\tfrac{1}{2}NH_4^+ + \tfrac{1}{2}NO_2^- + \text{Facultative anaerobic microbes} \rightarrow \tfrac{1}{2}N_2 + H_2O$$

Example 1

In an example of treating wastewater in town A, $BOD_5$ (Biochemical Oxygen Demand in five days) of the influent is 200 mg/L, COD (Chemical Oxygen Demand) of the influent is 305 mg/L, the concentration of ammonium nitrogen in the influent is 10.49 mg/L, and the total concentration of phosphor in the influent is 2.10 mg/L. After pre-treatment, the wastewater enters directly into the FMBR, the treating processes are conducted successively, and no sludge is emitted. All processes are conducted in the FMBR, by increasing organic loading (supplying carbon sources) of the bioreactor through recycling the organic sludge, and by remaining the bioreactor in a facultative-anaerobic condition or anaerobic condition through controlling the effective parameters of the bioreactor, the metabolism of the facultative anaerobic microbes and the biological recycling processes occur such that the sludged are treated and the nitrogen and phosphor are removed at the same time, and the organic pollutants are decomposed into gases including carbon dioxide, nitrogen gas, phosphine, and phosphanylphosphane to be emitted in the air. After treating with the method of the present invention, $BOD_5$ of the effluent is 1.0 mg/L, COD of the effluent is 10.6 mg/L, the concentration of ammonium nitrogen in the effluent is 0.64 mg/L, and the total concentration of phosphor in the effluent is 0.2 mg/L. The assessment indicators for quality of the wastewater treatment of the present invention are better than that in the first grade A in standards Discharge standard of pollutants for municipal wastewater treatment plant (GB18918-2002).

Example 2

In an example of treating wastewater in Village B, $BOD_5$ of the influent is 410 mg/L, COD of the influent is 609 mg/L, the concentration of ammonium nitrogen in the influent is 20.96 mg/L, and the total concentration of phosphor in the influent is 4.10 mg/L. After pre-treatment, the wastewater enters directly into the FMBR, the treating processes are conducted successively, and no sludge is emitted. All processes are conducted in the FMBR, by increasing organic loading (supplying carbon sources) of the bioreactor through recycling the organic sludge, and by remaining the bioreactor in a facultative-anaerobic condition or anaerobic condition through controlling the effective parameters of the bioreactor, the metabolism of the facultative anaerobic microbes and the biological recycling processes occur such that the sludged are treated and at the same time the nitrogen and phosphor are removed and the organic pollutants are decomposed into gases including carbon dioxide, nitrogen gas, phosphine, and phosphanylphosphane to be emitted in the air. After treating with the method of the present invention, $BOD_5$ of the effluent is 1.8 mg/L, COD of the effluent is 16.6 mg/L, the concentration of ammonium nitrogen in the effluent is 0.83 mg/L, and the total concentration of phosphor in the effluent is 0.34 mg/L. The assessment indicators for quality of the wastewater treatment of the present invention are better than that in the first grade A in standards Discharge standard of pollutants for municipal wastewater treatment plant (GB18918-2002).

The terms "facultative-anaerobic environment or anaerobic environment" or "facultative-anaerobic condition or anaerobic condition" direct to an environment (condition) where facultative anaerobic microorganisms (or facultative anaerobic microbes) are dominant in all microorganisms in the bioreactor. In addition, the term "facultative-anaerobic-adapted membrane bioreactor" means a membrane bioreactor where a facultative-anaerobic environment or anaerobic environment is formed. The terms "microbe" and "microorganism" mean the same.

**Claims**

1. A method for wastewater treatment in a bioreactor, comprising:

   recycling organic sludge in the bioreactor to increase organic loading of the bioreactor and supply carbon sources for processes of removing nitrogen and phosphor; and
   adjusting operational parameters for the bioreactor to form facultative-anaerobic environment or anaerobic environment in the bioreactor to generate microbes comprising facultative anaerobic microbes as the dominant microbes.

2. The method of claim 1, removing carbon, removing nitrogen, and removing phosphor are conducted simultaneously.

3. The method of claim 1, organic compounds in wastewater are transformed into carbon dioxide, nitrogen gas, phosphine, phosphanylphosphane, and water.

Europäisches
Patentamt

European
Patent Office

Office européen
des brevets

## EUROPEAN SEARCH REPORT

Application Number

EP 14 16 8624

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/011890 A2 (SIEMENS WATER TECH CORP [US]; ROEHL MARC ERIC [US]) 25 January 2007 (2007-01-25) * paragraphs [0010], [0018], [0019], [0025]; figure 1 * ----- | 1-3 | INV. C02F3/34 C02F3/30 |
| X | EP 2 253 596 A1 (JIANGXI JDL ENVIRONMENTAL PROT [CN] JIANGXI JDL ENVIRONMENTAL PROT CO) 24 November 2010 (2010-11-24) * abstract * * paragraphs [0002], [0008], [0009], [0015], [0020]; figure * ----- | 1-3 | |

TECHNICAL FIELDS
SEARCHED        (IPC)

C02F

The present search report has been drawn up for all claims

| Place of search | Date of completion of the search | Examiner |
|---|---|---|
| The Hague | 25 November 2014 | González Arias, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 16 8624

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2014

| Patent document cited in search report | | Publication date | Patent family member(s) | | Publication date |
|---|---|---|---|---|---|
| WO 2007011890 | A2 | 25-01-2007 | NONE | | |
| EP 2253596 | A1 | 24-11-2010 | CN | 101885538 A | 17-11-2010 |
| | | | EP | 2253596 A1 | 24-11-2010 |
| | | | JP | 5352528 B2 | 27-11-2013 |
| | | | JP | 2010264444 A | 25-11-2010 |
| | | | US | 2010288698 A1 | 18-11-2010 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 189182002 A